# EUROPÄISCHE PATENTANMELDUNG

(11) **EP 2 843 273 A1**
(43) Veröffentlichungstag der Anmeldung: **04.03.2015**
(21) Anmeldenummer: 13182117.5
(22) Anmeldetag: 29.08.2013
(51) Int. Cl.: F16K 1/42, F16K 25/00

(54) **Ventildiffusor für ein Ventil**

(71) Anmelder: Siemens Aktiengesellschaft, 80333 München (DE)
(72) Erfinder: Bell, Ralf, 45478 Mülheim an der Ruhr (DE); Böer, Isabell, 45479 Mülheim an der Ruhr (DE); Fischer, Thomas, 45479 Mülheim an der Ruhr (DE); Gaio, Giuseppe, 53173 Bonn (DE); Heinze, Raimund, 46049 Oberhausen (DE); Legenbauer, Markus, 45279 Essen (DE); Razowski, Damian, 45473 Mülheim an der Ruhr (DE); Riedel, Thomas, 45481 Mülheim an der Ruhr (DE); Ruda, Stanislaw, 47447 Moers (DE); Ziwes, Ralf, 46539 Dinslaken (DE)

(57) **Zusammenfassung**

Die Erfindung betrifft einen Ventildiffusor (3) für ein Ventil (1), wobei der Ventildiffusor (3) einen Ventilsitz (8) aufweist, der zum Kontaktieren mit einem Ventilkörper ausgebildet ist, wobei der Ventilsitz (8) eine Buchse (10) zum Kontaktieren mit einem Ventilkörper aufweist und aus einem gegenüber dem Ventildiffusor (3) anderen verstärkten Material ausgebildet ist.

## Beschreibung

Die Erfindung betrifft einen Ventildiffusor für ein Ventil mit einem Ventilsitz der zum Kontaktieren mit einem Ventilkörper ausgebildet ist.

In Strömungsmaschinen wie z.B. Dampfturbinen werden Ventile unter anderem zur Regelung eines Dampf-Massenstroms eingesetzt. In der kommunalen Energieversorgung werden Dampfturbinen mit einer vergleichsweise hohen Leistungsklasse benötigt, was dazu führt, dass die dafür verwendeten Ventile ebenso eine entsprechende Bauteilgröße umfassen. Solche Ventile umfassen in der Regel ein Ventilgehäuse und einen im innerhalb des Ventilgehäuses angeordneten Ventildiffusor durch den ein einströmender Dampf strömt. Der Massenstrom wird mit Hilfe eines Ventilkörpers eingestellt, der in Richtung des Ventildiffusors bewegbar ausgebildet ist. In komplett geschlossener Position liegt der Ventilkegel an einer Dichtfläche an einem Ventilsitz der mit dem Ventildiffusor verbunden ist. In einer geöffneten Position wird zwischen dem Ventilkegel und dem Ventilsitz eine Durchströmfläche gebildet, die direkt mit dem Massenstrom durch das Ventil korreliert ist.

Im geschlossenen Zustand liegt der Ventilkegel am Ventilsitz an und bildet eine Kontaktfläche. Diese Kontaktfläche ist durch die Stöße des Ventilkegels beim Schließen höher belastet. Dieser Bereich unterliegt daher neben Verschleißerscheinungen durch Dampferosionen auch Verschleißerscheinungen durch mechanische Belastungen. Um solchen mechanischen Belastungen entgegen zu wirken, wird in der Regel die Kontaktfläche am Ventilsitz gepanzert, was z.B. durch Stellitieren erfolgt. Allerding ist trotz Panzerung nach einem längeren Betrieb oftmals die Sanierung der Oberfläche des Ventilsitzes aufgrund von Festkörpererosion und Dampferosion erforderlich. Der Austausch des kompletten Ventilsitzes wäre eine Möglichkeit weiteren Schäden vorzubeugen, wobei der Austausch erschwert ist, da in der Regel Montagearbeiten an der Turbine mit erhöhtem Aufwand einhergehen.

Es ist ebenso denkbar, durch eine entsprechende Materialauswahl dem Verschleiß durch Erosion entgegen zu wirken. Solche Materialien sind allerdings vergleichsweise teuer und in der Regel treten nach einer bestimmten Betriebszeit dennoch Schäden am Ventilsitz auf. Sofern die Sanierung einer solchen beschädigten Oberfläche nicht möglich ist, wird der Ventilsitz abgebaut und durch einen neuen ersetzt. Bei Revisionen und bei Stillständen werden die Ventile begutachtet und gegebenenfalls eine Entscheidung vor Ort getroffen, welche Maßnahme erforderlich ist, um die Funktionsweise des Ventils wieder herzustellen. Entweder ist eine Sanierung oder ein kompletter Ventiltausch erforderlich. Für eine hinreichend gute Analyse sind Prüfungen wie z.B. eine Farbeindringprüfung oder eine Ultraschallprüfung erforderlich. Sofern eine Maßnahme ergriffen werden soll, liegt eine nicht zu vernachlässigende, teilweise verlängerte Standzeit zwischen der Entscheidung und der Durchführung vor.

Die Erfindung hat es sich zur Aufgabe gemacht, die Verfügbarkeit eines Ventils zu verbessern.

Gelöst wird diese Aufgabe durch einen Ventildiffusor für ein Ventil mit einem Ventilsitz der zum Kontaktieren mit einem Ventilkörper ausgebildet ist, wobei der Ventilsitz eine Buchse zum Kontaktieren mit einem Ventilkörper umfasst.

Erfindungsgemäß wird somit vorgeschlagen, einen Ventildiffusor derart weiterzubilden, dass dieser eine Buchse umfasst, die einen Kontakt zu dem Ventilkörper aufweist. Diese Buchse kann nach bestimmten vorher definierten Revisionsintervallen unabhängig von Befunden ausgetauscht werden. Das erspart viel Zeit, da Prüfungen von vornherein als nicht erforderlich eingestuft werden. Dadurch verringern sich die Standzeiten eines solchen Ventils.

Vorteilhafte Weiterbildungen sind in den Unteransprüchen angegeben. In einer ersten vorteilhaften Weiterbildung ist die Buchse aus einem anderen verstärkten Material ausgebildet.

Erfindungsgemäß wird hier somit vorteilhafterweise Weise ein Material für die Buchse eingesetzt, das gegenüber dem Material des Ventildiffusors verstärkt ausgebildet ist und somit unempfindlicher gegenüber dem ständigen Kontakt zum Ventilkörper. Jeder Kontakt des Ventilkörpers auf den Ventildiffusor führt zu einer mechanischen Verformung und zu einer Erosion. Daher wird erfindungsgemäß vorgeschlagen diesen Bereich der Kontaktfläche der durch die Buchse gebildet wird, mit einem gegenüber dem Ventildiffusor verstärkten Material auszubilden. Die mechanische Deformation und die Erosion wird dadurch verringert und die Lebensdauer des Ventils erhöht.

Vorteilhafterweise besteht das Material der Buchse aus Stellit. Gegenüber Dampfzuständen ist Stellit ein geeignetes Material, um einer Schädigung entgegenzuwirken. Vorteilhafterweise ist die Buchse ringförmig ausgebildet und der äußere Bereich parallel zur Rotationssymmetrieachse ausgebildet. Die Buchse wird hierbei durch Einpressen eingebaut. In einer alternativen Ausführungsform kann die Buchse ringförmig und der äußere Bereich kegelig ausgebildet sein. Somit ist die äußere Form der Buchse kegelig ausgeführt. Der größere Durchmesser des Kegels wird entgegen der Einbaurichtung gelegt, so dass die Buchse formschlüssig fixiert wird. Hierbei kann der Einbau z.B. über das Eineisen der Buchse erfolgen.

Vorteilhafterweise ist somit ein kompletter Austausch des Diffusors bzw. des Ventilsitzes nicht notwendig. Ebenso ist es nicht erforderlich, den Abbau des kompletten Ventils von der Turbine durchzuführen.

Ein besonderer Vorteil entsteht darin, dass eine Revision vorab besser geplant und durchgeführt werden kann, da der Austausch der Buchse unabhängig von einem Befund immer stattfinden könnte.

Dadurch können Farbeindringprüfungen und Ultraschallprüfungen gänzlich entfallen. Eine aufwändige und teure sowie gesundheitsgefährdende Sanierung entfällt.

Die Erfindung wird nun anhand eines Ausführungsbeispiels näher erläutert. Die Figuren zeigen in schematischer Weise ein Ausführungsbeispiel der Erfindung.

Es zeigen:
- Figur: eine Querschnittsansicht eines erfindungsgemäßen Ventils.

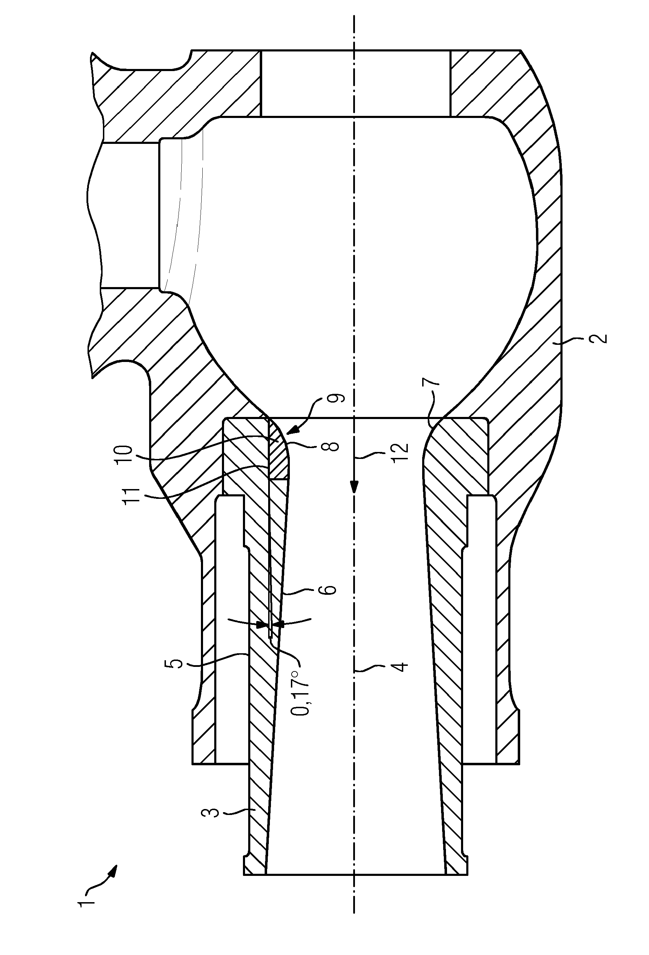

Die Figur zeigt eine Querschnittsansicht eines erfindungsgemäßen Ventils 1. Das Ventil 1 umfasst ein Ventilgehäuse 2 und innerhalb des Ventilgehäuses 2 einen im Wesentlichen rotationssymmetrisch ausgebildeten Ventildiffusor 3. In der Figur ist eine Symmetrieachse 4 eingezeichnet. Der Ventildiffusor 3 ist im Wesentlichen rotationssymmetrisch zu dieser Symmetrieachse 4 ausgebildet. Der Ventildiffusor 3 umfasst einen im Wesentlichen zylinderförmigen Mantelbereich 5, der im Wesentlichen parallel zur Symmetrieachse 4 ausgebildet ist. Innerhalb des Ventildiffusors 3 ist ein kegelförmig ausgebildeter Innenmantelbereich 6 ausgebildet, durch den im Betrieb ein Dampf mit vergleichsweise hoher Temperatur und hohem Druck strömt. Am Ventildiffusoranfang 7 ist der Ventildiffusor 3 am Gehäuse 2 fest angeordnet. Die in der Figur dargestellte Ausführungsform zeigt oberhalb der Symmetrieachse 4 die Erfindung. Unterhalb der Symmetrieachse 4 ist der Stand der Technik dargestellt.

Der Ventildiffusor 3 umfasst einen Ventilsitz 8, der am Ventildiffusoranfang 7 angeordnet ist und zum Kontaktieren mit einem nicht näher dargestellten Ventilkörper ausgebildet ist. Der Ventilkörper berührt den Ventilsitz 8 im Wesentlichen im Kontaktbereich 9. Der Kontaktbereich 9 wird durch eine Buchse 10 verbessert. Die Buchse 10 hat nunmehr den Kontakt mit dem nicht näher dargestellten Ventilkörper und ist aus einem gegenüber dem Ventildiffusor 3 anderem verstärkten Material ausgebildet. Der Werkstoff der Buchse 10 besteht aus Stellit. Die Buchse 10 ist im Wesentlichen ringförmig ausgebildet und wird an die Ventildiffusorinnenoberfläche angepasst. Der äußere Bereich 11 der Buchse 10 ist parallel zur Symmetrieachse 4 ausgebildet.

In einer alternativen Ausführungsform wird der äußere Bereich 11 der Buchse 10 kegelig ausgeführt. In der Figur ist der Winkel zwischen der Symmetrieachse 4 und dem kegelig ausgeführten äußeren Bereich 11 der Ventilbuchse dargestellt, der im Wesentlichen bei 0,17° liegt. Weitere Werte für diesen Winkel liegen zwischen 0,05° und 0,25°.

Die Buchse 10 wird eingepresst. Im Fall der kegelig ausgeführten Buchse 10 wird die Buchse 10 formschlüssig mit dem Ventildiffusor fixiert, wobei der größere Durchmesser entgegen einer Einbaurichtung 12 angeordnet wird. Der Einbau der Buchse 10 kann über Eineisen erfolgen.

In einer alternativen Ausführungsform entspricht das Material der Buchse 10 dem Material des Ventildiffusors 3, wobei die Buchse 10 eine Stellitpanzerung aufweist.

## Patentansprüche

1. Ventildiffusor (3) für ein Ventil (1) mit einem Ventilsitz (8) der zum Kontaktieren mit einem Ventilkörper ausgebildet ist,
**dadurch gekennzeichnet, dass**
der Ventilsitz (8) eine Buchse (10) zum Kontaktieren mit einem Ventilkörper umfasst.

2. Ventildiffusor (3) nach Anspruch 1,
wobei die Buchse (10) aus einem anderen verstärkten Material ausgebildet ist.

3. Ventildiffusor (3) nach Anspruch 1 oder 2,
wobei das Material der Buchse (10) ein Stellit ist.

4. Ventildiffusor (3) nach Anspruch 1,
wobei die Buchse (10) eine Stellitpanzerung aufweist.

5. Ventildiffusor (3) nach einem der vorhergehenden Ansprüche,
wobei die Buchse (10) ringförmig ausgebildet ist und der äußere Bereich parallel zur Symmetrieachse (4) ausgebildet ist.

6. Ventildiffusor (3) nach einem der Ansprüche 1 bis 4, wobei die Buchse (10) ringförmig ausgebildet ist und der äußere Bereich (11) kegelig ausgebildet ist.

7. Ventildiffusor (3) nach Anspruch 6,
wobei der größere Durchmesser am Ventildiffusorende (7) angeordnet ist.

8. Verfahren zum Einbau einer Buchse (10) auf einen Ventildiffusor (3),
wobei die Buchse (10) eingepresst wird.

9. Verfahren nach Anspruch 8,
wobei die Buchse (10) kegelig ausgebildet wird, wobei der größere Durchmesser entgegen der Einbaurichtung (12) angeordnet wird und die Buchse (10) formschlüssig mit dem Ventildiffusor (3) fixiert wird.

10. Verfahren nach Anspruch 9,
wobei der Einbau der Buchse (10) über ein Eineisen der Buchse erfolgt.
